# EUROPEAN PATENT APPLICATION

(11) **EP 1 384 497 A1**
(43) Date of publication of application: **28.01.2004**
(21) Application number: 03254568.3
(22) Date of filing: 21.07.2003
(51) Int. Cl.: A63B 29/02, F16B 45/00

(54) **Karabiners**

(30) Priority: 23.07.2002 GB 0217010
(71) Applicant: DMM Engineering Limited, Llanberis, Gwynedd, LL55 4EL (GB)
(72) Inventor: Hall, Frederick Allan, Waunfawr, Caernarfon (GB)
(74) Representative: Lyons, Andrew John

(57) **Abstract**

A karabiner (100) comprises a generally C-shaped body (42), with its free ends (44, 46) curved towards each other and forming a gap therebetween, a gate (50) for closing the gap, and a roller (108) mounted in a recess(102) at one end of the body to act as a runner for ropes and the like.

## Description

This invention concerns snap hooks, also known as karabiners, for use in climbing and other activities requiring connections to be made to ropes, cables and carrying loops for equipment.

Karabiners generally comprise a C-shaped body with its ends curved towards each other and forming a gap closed by a spring loaded gate pivotally mounted on one body end and urged into engagement with the other body end. A thimble or other locking member may be provided either on the gate or the free body end and which is movable, say slidably or along screw threading, to lock the gate in a closed position.

When unlocked, the gate of a karabiner is urged closed and a rope or loop can be snapped into the karabiner by pushing it against the gate to open it. Once the rope or loop is in the confines of the C-shaped body, the gate can spring back to its closed position, where it can be locked, if desired.

In climbing and mountaineering situations it is common for a length of rope to have a number of karabiners connected to and for the rope to be pulled through them as the climber makes progress on the route in question. Interference between the rope and the karabiners causes friction and therefore drag on the rope. This interference increases with the number of karabiners and the amount of sideways deviation (zigzagging) of the rope between the karabiners.

Good climbing practice aims to reduce the amount of sideways rope deviation between karabiners but that is not always possible, given the random nature of mountain and rock route formations. Even the use of twin ropes cannot guarantee elimination of rope drag on a route and the problem becomes exaggerated as ropes for climbing and mountaineering steadily increase in length to suit market demands for longer routes.

Rope drag can significantly increase the risks in climbing and has only really been addressed for climbing and mountaineering rescue situations, where it is normal to use any number of pulley type products in conjunction with karabiners to reduce drag and friction.

An object of the present invention is to provide a karabiner with reduced rope drag and friction properties.

According to the invention it is proposed that a karabiner of the type comprising a generally C-shaped body, with its free ends curved towards each other and forming a gap therebetween, and a gate for closing the gap has one or more rollers.

Ideally the or each roller is positioned relative to the body of the karabiner, so as to reduce rope drag through the karabiner in normal climbing situations. The karabiners of the invention preferably are also able to act also as pulleys and so may be useful for use in rescue situations.

In one preferred embodiment of the invention a karabiner will have a single roller located at one end of the karabiner body, where the body bends to form one free end of the C-shape. In conventional karabiners there will usually be a rope guide groove at that position. The roller in this embodiment is preferably at the end of the karabiner at which the free end of the gate locates.

It is also envisaged that karabiners of the invention may have a roller at each end of the karabiner body.

It is further envisaged that instead of a single roller at any end of the karabiner body, a pair of rollers may be provided side by side. It may be desirable to have a pair of rollers at one end of the karabiner and a single roller at the opposite end.

A roller may form part of the body of a karabiner of the invention. In other words the roller will form part of a side of the karabiner body. More preferably the roller will be mounted within the body of the karabiner, i.e. within a recess formed in the body.

The rollers used in karabiners of the invention will preferably have a concave profile to provide a running groove for a rope. Preferably for karabiners where the roller is mounted within a recess of the body, the profile of the recess will correspond with the roller profile, so that there can be a consistent gap between the roller and the body.

Rollers used in karabiners of the invention are preferably mounted for free rotation on axles mounted between sides of the roller recesses. The axle is preferably deformable under high loads, such as fall loads, so that the roller will contact the body of the karabiner to provide braking. The deformation of the axle may also serve to provide additional strength for the karabiner by triangulation.

Rollers used in karabiners of the invention may be single components or may be formed as say two split components.

It may be desirable to provide a webbing sling or strap on a karabiner for attachment thereof to other items of equipment. Preferably the body of a karabiner of the invention will have a groove in at least one face thereof to provide a location for the webbing sling or strap. The grooves are preferably at the opposite end of the karabiners to the rollers.

The present invention may be applied to any karabiners of the basic type defined irrespective of the type of gate. Thus karabiners of the invention may have solid gates or wire gates and may have additional gate locking means.

Karabiners of the invention may be provided with a loop or ring at one end of the body, wherein the karabiner can be attached to other items of equipment.

This invention will now be further described, by way of example only, with reference to the accompanying drawings, in which:
Figure 1 shows a pair of climbers using a single rope;
Figure 2 shows a pair of climbers using a pair of ropes;
Figure 3 shows a pair of climbers using a single rope with greater degree of zigzagging;
Figure 4 shows a pair of climbers using a pair of ropes again with a greater degree of zigzagging;
Figure 5 shows a conventional karabiner;
Figure 6 shows a karabiner according to the invention;
Figure 7 is an exploded view of the karabiner of Figure 6;
Figure 8 shows the karabiner of Figure 6 with a webbing sling; and
Figures 9 to 14 show other karabiners according to the invention.

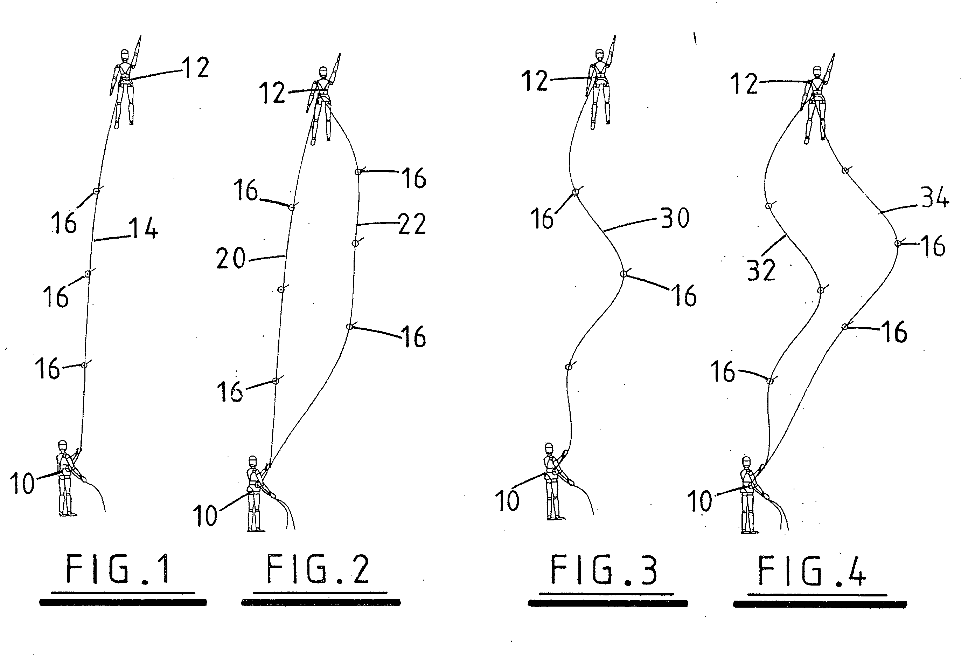

Referring to Figure 1 of the accompanying drawings, a pair of climbers 10 and 12 using a single rope 14 that runs through karabiners 16 that are attached to a rock face by various items of rock climbing equipment. The lower climber 10 belays the lead climber 12 who climbs past the karabiners. In the illustrated situation the rope remains fairly straight, so that there is little risk of friction through the karabiners.

Similarly in the arrangement shown in Figure 2 of the accompanying drawings two ropes 20 and 22 are used but still without zigzagging between each karabiner 16.

However, in the arrangements shown in Figures 3 and 4, the former with a single rope 30 and the latter with two ropes 32 and 34, the ropes zigzag between the karabiners 16 introducing the risk of rope drag through the karabiners.

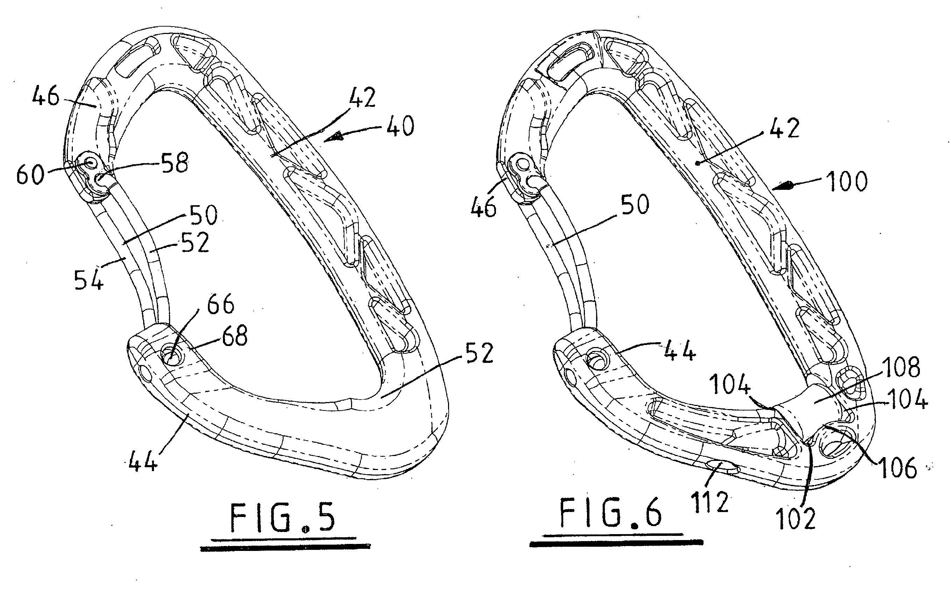

Figure 5 of the accompanying drawings shows a conventional karabiner 40 comprising a generally C-shaped body 42 having its free ends 44, 46 generally facing each other but leaving a gap 48 therebetween. Pivotally mounted on one free end 46 of the body is a gate 50. The body 42 of the karabiner where it curves at its bottom end as drawn is shaped to provide a groove location 52 for ropes or the like.

The gate 50 is formed of wire basically bent double. The wire is bent double to form two strands 52, 54 with a loop between them. The two strands 52, 54 overlie each other for a first part from the loop, so that in the karabiner they are in the plane of the body. From the end of the first part, the two strands diverge to opposite sides of the body before bending inwards to form ends 58, 60 that each locate in separate holes one above the other in the free end 46 of the karabiner body. The shaping of the gate and the offsetting of its pivot points urge the gate to a closed position. Once pressure is applied to the gate inwardly, it will open but will always spring back to a closed position when the pressure is removed. Thus, a rope or the like can be pushed into the karabiner through the gate which then snaps back to close the karabiner and retain the rope or the like therein.

The free end of the gate has located in the loop a nut 66 and the free end 44 of the karabiner body has a shaped slot 68, which receives the nut when the gate is closed.

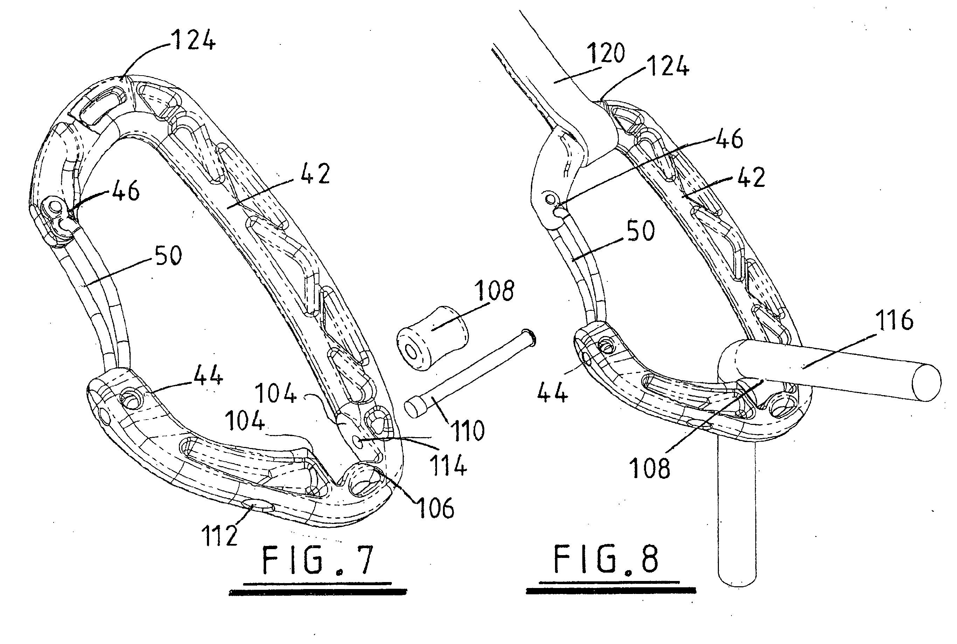

Turning to Figure 6 and 7 of the accompanying drawings, a karabiner 100 according to the invention is shown, which is based on the design of karabiner shown in Figure 5. At the end of the karabiner body where the rope groove would normally be, a recess 102 is formed in the body. The recess has parallel sides 104 and a convex base 106. A roller 108 is mounted in the recess 102 on an axle 110. The axle 110 is fitted through a hole 112 through the body to one side of the recess and into a blind bore 114 in the opposite side of the recess.

The roller 108 has a concave profile to provide a running groove for a rope 116. As can be seen, the profile of the roller matches the profile of the base of the recess. By making the axle so that it can deform under heavy loads, such as due to a fall, the roller will contact the base of the recess to stop or slow down rotation of the roller in order to provide a braking action on the rope. Furthermore, once the axle has been deformed due to a high load, the roller will not rotate and that will serve as an indication that the karabiner should no longer be used.

At the opposite end of the karabiner body it may be desirable to attach a webbing sling 120 for attachment of the karabiner to other equipment. For that purpose, that end of the body has a groove 124 in at least one face of the body to serve to locate the webbing sling.

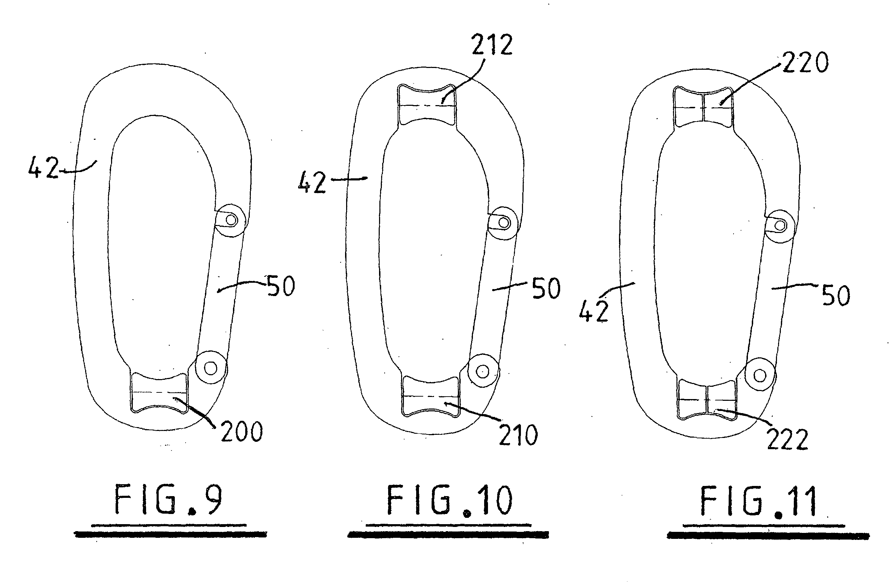

Turning to Figures 9 to 14, there are shown variations on the karabiner of Figure 6. Like parts have been given the same reference numbers for simplicity. In Figure 9, the roller 200 is at the gate pivot end of the karabiner rather than at the gate-locking end as in Figure 6.

In Figure 10, a karabiner has a pair of rollers 210 and 212, the rollers being at opposite ends of the karabiner body.

Figure 11 shows a karabiner that is similar to that of Figure 10, except that the rollers 220,222 are split transversely to their axles. This arrangement offers design freedom in achieving controlled deformation of the axle as previously described.

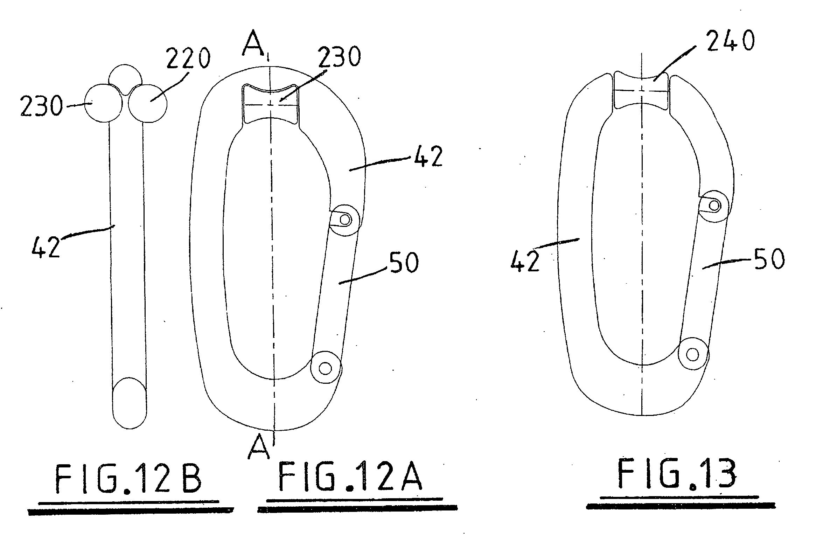

Figure 12A is a plan view and Figure 12B is a section on line AA of Figure 12A. In these drawings instead of a single roller at one end of the karabiner, a pair of side-by-side rollers 230 is provided.

Figure 13 shows a karabiner having it roller 240 between parts of a split body.

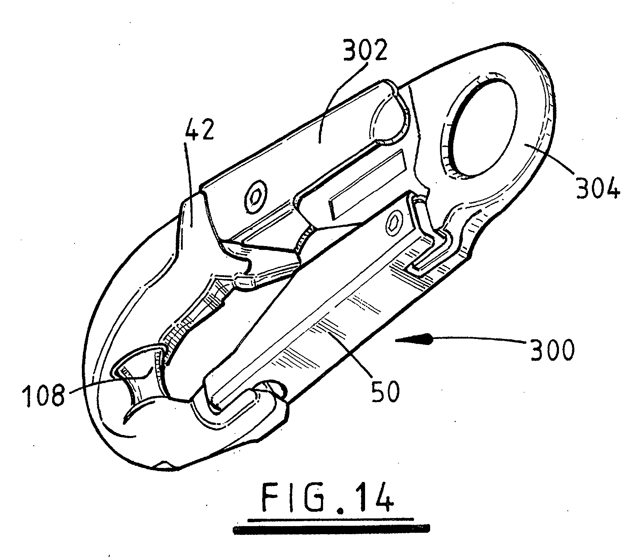

Finally, Figure 14 shows a karabiner 300 having a body 42, a gate 50 with a pivoting locking component 302 on the opposite side of the body, a roller 108 at the end of the body where the free end of the gate locates and a ring 304 at the opposite end of the body. The ring can be used to attach the karabiner to other items of equipment, such as, for example a belt or rope.

## Claims

1. A karabiner comprising a generally C-shaped body, with its free ends curved towards each other and forming a gap therebetween, a gate for closing the gap, and one or more rollers.

2. A karabiner as claimed in claim 1, wherein the or each roller is positioned relative to the body of the karabiner, so as to reduce rope drag through the karabiner in normal climbing situations.

3. A karabiner as claimed in claim 1 or 2 having a single roller located at one end of the karabiner body, where the body bends to form one free end of the C-shape.

4. A karabiner as claimed in claim 3, wherein the roller at the end of the karabiner at which the free end of the gate locates.

5. A karabiner as claimed in claim 1 or 2 having a roller at each end of the karabiner body.

6. A karabiner as claimed in any one of claims 1 to 5, wherein instead of a single roller at any end of the karabiner body, a pair of rollers may be provided side by side.

7. A karabiner as claimed in claim 6 having a pair of rollers at one end of the karabiner and a single roller at the opposite end.

8. A karabiner as claimed in any one of claims 1 to 7, wherein a roller forms part of the body of the karabiner.

9. A karabiner as claimed in claim 8, wherein the roller forms part of a side of the karabiner body.

10. A karabiner as claimed in claim 8 or 9, wherein the roller is mounted within the body of the karabiner.

11. A karabiner as claimed in claim 10, wherein the roller is mounted within a recess formed in the body.

12. A karabiner as claimed in any one of claims 1 to 11, wherein the roller has a concave profile to provide a running groove for a rope.

13. A karabiner as claimed in claim 12, wherein for karabiners where the roller is mounted within a recess of the body, the profile of the recess will correspond with the roller profile, so that there is a consistent gap between the roller and the body.

14. A karabiner as claimed in any one of claims 1 to 13, wherein the or each roller is mounted for free rotation on axles mounted between sides of the roller recesses.

15. A karabiner as claimed in claim 14, wherein the axle is deformable under high loads, so that the roller will contact the body of the karabiner to provide braking.

16. A karabiner as claimed in any one of claims 1 to 15, wherein the rollers are single components.

17. A karabiner as claimed in any one of claims 1 to 15, wherein the rollers are formed as split components.

18. A karabiner as claimed in any one of claims 1 to 17 having a webbing sling or strap.

19. A karabiner as claimed in claim 18, wherein the body of the karabiner has a groove in at least one face thereof to provide a location for the webbing sling or strap.

20. A karabiner as claimed in claim 19, wherein the grooves are at the opposite end of the karabiner to the rollers.

21. A karabiner as claimed in any one of claims 1 to 20 having a springloaded gate.

22. A karabiner as claimed in any one of claims 1 to 21, having a solid gate.

23. A karabiner as claimed in any one of claims 1 to 21 having a wire gate.

24. A karabiner as claimed in any one of claims 1 to 23 having additional gate locking means.

25. A karabiner as claimed in any one of claims 1 to 24 having a ring at one end of the body.

26. A karabiner substantially as hereinbefore described with reference to and as illustrated in any one of Figures 6 to 14 of the accompanying drawings.
